(19)

Europäisches
Patentamt

European
Patent Office

Office européen
des brevets

(11) **EP 2 540 794 A1**

(12) **DEMANDE DE BREVET EUROPEEN**

(43) Date de publication:
**02.01.2013 Bulletin 2013/01**

(51) Int Cl.:
***C09K 8/588*** *(2006.01)*

(21) Numéro de dépôt: **12290192.9**

(22) Date de dépôt: **08.06.2012**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **29.06.2011 FR 1102029**

(71) Demandeur: **IFP Energies nouvelles
92852 Rueil-Malmaison Cedex (FR)**

(72) Inventeurs:
• **Henaut, Isabelle
92500 Rueil-Malmaison (FR)**
• **Hamdi, Khalil
75011 Paris (FR)**
• **Argillier, Jean-François
92500 Rueil-Malmaison (FR)**

(54) **Procédé optimisé de recupération pétrolière assistée avec préservation des polymeres par ajout de composes sacrificièls**

(57) L'invention concerne un procédé amélioré de récupération pétrolière assistée à l'aide de polymères, dans lequel ces polymères sont préservés de la dégradation mécanique par ajout d'un additif comprenant des composés sacrificiels. Les composés sacrificiels sont dégradés préférentiellement aux polymères actifs, permettant une récupération optimisée de l'huile dans le réservoir pétrolier. Les composés sacrificiels peuvent être des polymères de même nature que les polymères actifs, mais de poids moléculaire supérieur ou des polymères de nature différente ayant des liaisons plus fragiles. Le choix du ou des composés sacrificiels est fait en fonction d'une moindre résistance à la dégradation mécanique, en comparaison avec les polymères actifs de la solution permettant la récupération assistée.

EP 2 540 794 A1

**Description**

**Domaine de l'invention**

La présente invention concerne un procédé optimisé de récupération assistée à l'aide d'un fluide de balayage comportant au moins un polymère, dans lequel ce ou ces polymère(s) dits "actifs" sont préservés de la dégradation mécanique, par ajout d'un additif comprenant des composés sacrificiels.

**Art antérieur**

Depuis la crise mondiale de l'énergie, il est devenu essentiel de pouvoir récupérer le maximum d'hydrocarbures contenu dans des formations souterraines.

La récupération par des techniques conventionnelles d'un réservoir à huile se limite en moyenne à 33 %. Pour accroître ce taux et ainsi espérer rentabiliser un gisement pétrolier, des procédés de récupération assistée sont mis en oeuvre. Ces méthodes complexes consistent principalement en l'injection de fluides spécifiques ou de chaleur.

Parmi les techniques de récupération conventionnelles, la méthode la plus couramment utilisée consiste à injecter via un puits injecteur un fluide aqueux (en général de l'eau ou de la saumure). Ce fluide balaye la formation souterraine pour forcer les hydrocarbures à sortir des pores de la roche où il se trouve absorbé. Des puits producteurs permettent de récupérer un effluent de production comprenant un mélange d'eau, de sels et d'hydrocarbures.

Il existe plusieurs méthodes de récupération assistée de pétrole (Enhanced Oil Recovery (EOR) en terminologie anglo-saxonne). Lorsque le fluide aqueux injecté, aussi appelé fluide de balayage, est additionné de composés, on parle de récupération assistée tertiaire par voie chimique. Ces composés chimiques sont des polymères, tensioactifs, des composés alcalins, ou des mélanges de ces composés. Par rapport à une simple injection d'eau ou de saumure, l'intérêt de la présence d'un polymère est d'augmenter la viscosité du fluide de balayage et par conséquent d'améliorer le rapport de mobilité entre le fluide injecté et les hydrocarbures en place dans la formation souterraine. Le taux de récupération en hydrocarbures est augmenté grâce à une meilleure efficacité du balayage de la formation pétrolière. Les polymères utilisés dans cette méthode sont généralement des polymères de fortes masses moléculaires utilisées pour leurs propriétés viscosifiantes.

L'injection de polymères dans le gisement, communément appelé "Polymer Flooding" en anglais, est l'une des méthodes les plus couramment utilisées. Ces polymères hydrosolubles augmentent la viscosité de l'eau injectée dans la formation, modifiant ainsi le rapport de mobilité huile/eau. Cela favorise un balayage de type "piston" et résulte en une meilleure efficacité volumétrique de drainage de l'huile en place.

Les polymères sont mélangés en surface et injectés dans les puits injecteurs. Il s'agit de structures de fortes masses moléculaires, typiquement supérieures à $10^6$ g/mol. Cette caractéristique fondamentale est à l'origine de leur pouvoir viscosifiant, mais explique également leur principal inconvénient, à savoir leur dégradation mécanique.

Durant l'injection des polymères dans le réservoir, les fluides déplacés sont en effet soumis à des cisaillements élevés et à des écoulements élongationnels, notamment dans l'unité d'injection initiale, les buses et pompes, des constrictions dans les réservoirs et aux abords des puits, entraînant ainsi une dégradation partielle des polymères et une limitation inhérente de leur efficacité.

De manière inattendue, une solution à ce problème a été trouvée en limitant la dégradation mécanique des solutions de polymères communément utilisées en EOR, par ajout en faible quantité (de l'ordre de quelques ppm en poids par rapport à la phase aqueuse) d'une seconde variété de polymères présentant soit une masse moléculaire plus élevée, soit des liaisons plus fragiles. Ces additifs, également désignés comme "agents sacrificiels" ou "composés sacrificiels" dans la suite de la description, se dégradent préférentiellement, dissipant suffisamment d'énergie pour protéger les polymères "actifs".

**Description de l'invention**

Résumé de l'invention

L'invention concerne un procédé de récupération assistée de pétrole par injection d'une solution comprenant au moins un polymère actif dans un puits pétrolier, dans lequel on ajoute à la solution de polymères actifs un additif comprenant un polymère sacrificiel dont la dégradation mécanique est préférentielle par rapport aux polymères actifs, en quantité suffisante pour limiter la dégradation mécanique des polymères actifs.

De préférence, on choisit le polymère sacrificiel en fonction de l'aptitude du polymère sacrificiel à préserver le polymère actif de la dégradation mécanique quantifiée par le gain sur le pourcentage de dégradation du polymère actif, défini comme suit :

$$gain = \%\deg - \frac{\%\deg_{AS}}{\%\deg},$$

avec :

$$\%\deg = 1 - \frac{\eta_{dégradé}}{\eta_{int}} \quad et \quad \%\deg_{AS} = 1 - \frac{\eta_{dégradé\,AS}}{\eta_{int\,AS}}$$

et :

$\eta_{dégradé}$ correspond à la viscosité de la solution polymérique après dégradation mécanique via l'appareil de cisaillement par capillarité,

$\eta_{int}$ correspond à la viscosité initiale de la solution polymérique,

$\eta_{dégradé\,AS}$ correspond à la viscosité de la solution polymérique contenant l'agent sacrificiel après dégradation mécanique via l'appareil de cisaillement par capillarité,

$\eta_{int\,AS}$ correspond à la viscosité initiale de la solution polymérique contenant l'agent sacrificiel,

$\eta_{int}$ et $\eta_{dégradé}$, ainsi que $\eta_{int\,AS}$ et $\eta_{dégradé\,AS}$ sont mesurées via le rhéomètre en géométrie cône plan.

Le gain sur le pourcentage de dégradation est de manière préférée supérieur à 10%, et de manière encore plus préférée supérieur à 30%.

La quantité de polymère sacrificiel est avantageusement comprise entre 5 et 500 ppm poids par rapport à la phase aqueuse.

Dans un mode de réalisation, le polymère sacrificiel est un polymère de même nature qu'au moins un des polymères actifs et de masse moléculaire plus élevée. Dans ce cas, la masse moléculaire du polymère sacrificiel peut être au moins 1,5 fois plus élevée que celle du polymère actif de même nature.

Dans un autre mode de réalisation, le polymère sacrificiel est un polymère de nature différente par rapport au ou aux polymères actifs et comporte des liaisons plus fragiles que celles du ou des polymères actifs.

Le polymère sacrificiel peut être choisi parmi les polyacrylamides, hydrolysés ou non (PAM, HPAM), les copolymères acrylamide avec au moins un monomère sulfoné, le polyoxyde d'éthylène (POE), les polysaccharides.

Description détaillée de l'invention

L'invention concerne une méthode de récupération pétrolière assistée améliorée par balayage à l'aide d'une solution de polymères ("Polymer flooding"), dans lequel ces polymères sont préservés de la dégradation mécanique par ajout d'un additif comprenant des composés sacrificiels. Les composés sacrificiels sont dégradés préférentiellement aux polymères actifs, permettant une récupération optimisée de l'huile dans le puits de production. Les composés sacrificiels peuvent être des polymères de même nature que les polymères actifs, mais de poids moléculaire supérieur ou des polymères de nature différente ayant des liaisons plus fragiles. Le choix du ou des composés sacrificiels est fait en fonction de sa moindre résistance à la dégradation mécanique, en comparaison avec les polymères actifs de la solution permettant la récupération assistée.

Les polymères actifs de la solution permettant la récupération assistée sont généralement choisis parmi :

- PAM (polyacrylamides) plus ou moins hydrolysés,
- copolymères d'acrylamides et de monomères sulfonés et autres monomères,
- xanthane,
- autres polymères naturels,
- tout polymère hydrosoluble de masse molaire supérieure à $10^6$ g/mol.

Choix de l'additif comprenant au moins un composé sacrificiel

Critère utilisé :

Le choix du ou des composés sacrificiels à ajouter à une solution de polymères actifs donnée est conditionné par différents facteurs, notamment la nature, la masse moléculaire, la proportion et/ou la cinétique de dégradation dans les conditions du puits du ou des polymères actifs.

Des essais de dégradation mécanique ont été réalisés sur un appareil de cisaillement par capillarité, construit suivant les instructions de "The American Petroleum Institute (API)", section "Evaluation of shear stability of polymer solution". La cinétique de dégradation a été évaluée par mesure de viscosité au rhéomètre à contrainte imposée en géométrie cône plan.

Le critère principal qui peut être retenu pour suivre l'aptitude du composé sacrificiel (généralement un polymère sacrificiel) à préserver le polymère actif de la dégradation mécanique est le gain sur le pourcentage de dégradation de ce dernier, défini comme suit :

1) Pourcentage de dégradation du polymère actif :

$$\% \deg = 1 - \frac{\eta_{dégradé}}{\eta_{int}}$$

2) Pourcentage de dégradation du polymère actif en présence d'agent sacrificiel :

$$\% \deg_{AS} = 1 - \frac{\eta_{dégradé\ AS}}{\eta_{int\ AS}}$$

3) Gain sur le pourcentage de dégradation apporté par la présence d'agent sacrificiel

$$gain = \% \deg - \frac{\% \deg_{AS}}{\% \deg},$$

avec :

$$\% \deg = 1 - \frac{\eta_{dégradé}}{\eta_{int}} \quad \text{et} \quad \% \deg_{AS} = 1 - \frac{\eta_{dégradé\ AS}}{\eta_{int\ AS}}$$

et :

$\eta_{dégradé}$ correspond à la viscosité de la solution polymérique après dégradation mécanique via l'appareil de cisaillement par capillarité,

$\eta_{int}$ correspond à la viscosité initiale de la solution polymérique $\eta_{dégradé\ AS}$ correspond à la viscosité de la solution polymérique contenant l'agent sacrificiel après dégradation mécanique via l'appareil de cisaillement par capillarité,

$\eta_{int\ AS}$ correspond à la viscosité initiale de la solution polymérique contenant l'agent sacrificiel,

$\eta_{int}$ et $\eta_{dégradé}$, ainsi que $\eta_{int\ AS}$ et $\eta_{dégradé\ AS}$ sont mesurées via le rhéomètre en géométrie cône plan.

De manière avantageuse, le gain doit être supérieur ou égal à 10%, préférentiellement supérieur à 30%.

Choix des composés sacrificiels

Les additifs utilisés dans la méthode selon l'invention peuvent comprendre deux types de composés sacrificiels (cas 1 et cas 2 ci-dessous).

Cas 1 : l'agent sacrificiel est de même nature que le polymère "actif", mais de plus grande masse moléculaire. La masse moléculaire du polymère sacrificiel doit être avantageusement au moins 1,5 fois plus élevée que celle du polymère actif de plus haute masse moléculaire, de manière plus préférée au moins 2 fois plus élevée.

Par exemple si le polymère actif est POE (poly oxyde d'éthylène) de masse moléculaire $4.10^6$ g/mol, on choisira un polymère sacrificiel : POE de masse moléculaire deux fois plus élevée : $8.10^6$ g/mol.

Cas 2 : l'agent sacrificiel contient des liaisons plus fragiles que celles du polymère actif. Par exemple, dans le cas d'un polymère actif contenant des liaisons covalentes C-O en alternance avec des liaisons C-C, un polymère comprenant dans son squelette uniquement des liaisons covalentes C-C dont l'énergie de liaison est inférieure, peut jouer le rôle d'agent sacrificiel.

Exemples de polymères sacrificiels

Par exemple l'agent sacrificiel peut être choisi parmi les polyacrylamides, hydrolysés ou non (PAM, HPAM), ou tout autre type de polymère utilisé dans la récupération assistée de type EOR (Enhanced Oil Recovery), polyoxyde d'éthylène (POE), polysaccharides, en fonction de la nature du ou des polymères actifs.

L'additif comprenant le composé sacrificiel est avantageusement ajouté à la solution de "polymer flooding" (fluide de balayage) dans une quantité comprise entre 5 et 500 ppm poids par rapport à la phase aqueuse.

**Exemples** :

Les proportions sont exprimées en ppm poids.

Cas 1 : agent sacrificiel de même nature que polymère "actif" (c'est-à-dire comprenant les mêmes monomères), mais de plus grande masse moléculaire.

- polymère actif : POE (poly oxyde d'éthylène) de masse moléculaire $4.10^6$ g/mol
- polymère sacrificiel : POE de masse moléculaire $8.10^6$ g/mol

L'utilisation d'un polymère sacrificiel (POE de masse moléculaire $8.10^6$ g/mol) entraîne un gain sur le pourcentage de dégradation qui est égal à 43 % à 3 bars et 27% à 6 bars.

| | Pourcentage de dégradation | |
| --- | --- | --- |
| | 1000 ppm polymère actif | 1000 ppm polymère actif + 100 ppm agent sacrificiel |
| 0 bars | 0 | 0 |
| 3 bars | 20,8 | 11,9 |
| 6 bars | 22,2 | 16,1 |

Cas 2 : agent sacrificiel contenant des liaisons plus fragiles que celles présentes dans le polymère actif

- polymère actif : POE de masse moléculaire $4.10^6$ g/mol
- polymère sacrificiel : HPAM (polyacrylamide) de masse moléculaire $18.10^6$ g/mol.

Le POE comporte dans son squelette des liaisons covalentes C-O dont l'énergie de liaison est 360kj/mol ; le HPAM ne contient que des liaisons covalentes C-C dont l'énergie est de 348 kJ/mol.

L'utilisation d'un polymère sacrificiel (HPAM de masse moléculaire $18.10^6$ g/mol) entraîne un gain sur le pourcentage de dégradation qui est égal à 45 % pour 100 ppm d'agent sacrificiel à 3 bars, 89% pour 200 ppm d'agent sacrificiel à 3 bars, 19% pour 100 ppm d'agent sacrificiel à 6 bars et 55% pour 200 ppm d'agent sacrificiel à 6 bars.

| | Pourcentage de dégradation | | |
|---|---|---|---|
| | 750 ppm polymère actif | 750 ppm polymère actif + 100 ppm agent sacrificiel | 750 ppm polymère actif + 200 ppm agent sacrificiel |
| 0 bars | 0 | 0 | 0 |
| 3 bars | 8,9 | 4,9 | 1,0 |
| 6 bars | 11,5 | 9,3 | 5,2 |

**Revendications**

1. Procédé de récupération assistée de pétrole par injection d'une solution comprenant au moins un polymère actif dans un puits pétrolier, **caractérisé en ce qu'**on ajoute à la solution de polymères actifs un additif comprenant un polymère sacrificiel dont la dégradation mécanique est préférentielle par rapport aux polymères actifs, en quantité suffisante pour limiter la dégradation mécanique des polymères actifs.

2. Procédé selon la revendication 1 dans lequel on choisit le polymère sacrificiel en fonction de l'aptitude du polymère sacrificiel à préserver le polymère actif de la dégradation mécanique quantifiée par le gain sur le pourcentage de dégradation du polymère actif, défini comme suit :

$$gain = \%\deg - \frac{\%\deg_{AS}}{\%\deg},$$

où :

$$\%\deg = 1 - \frac{\eta_{dégradé}}{\eta_{int}} \quad \text{et} \quad \%\deg_{AS} = 1 - \frac{\eta_{dégradé\,AS}}{\eta_{int\,AS}}$$

et :
$\eta_{dégradé}$ correspond à la viscosité de la solution polymérique après dégradation mécanique via l'appareil de cisaillement par capillarité,
$\eta_{int}$ correspond à la viscosité initiale de la solution polymérique

$\eta_{dégradé\,AS}$ correspond à la viscosité de la solution polymérique contenant l'agent sacrificiel après dégradation mécanique via l'appareil de cisaillement par capillarité,

$\eta_{int\,AS}$ correspond à la viscosité initiale de la solution polymérique contenant l'agent sacrificiel,

$\eta_{int}$ et $\eta_{dégradé}$, ainsi que $\eta_{int\,AS}$ et $\eta_{dégradé\,AS}$ sont mesurées via le rhéomètre en géométrie cône plan.

3. Procédé selon la revendication 1 ou 2 dans lequel le gain sur le pourcentage de dégradation est supérieur à 10%.

4. Procédé selon la revendication 3 dans lequel le gain sur le pourcentage de dégradation est supérieur à 30%.

5. Procédé selon l'une des revendications précédentes dans lequel la quantité de polymère sacrificiel est comprise entre 5 et 500 ppm poids par rapport à la phase aqueuse.

6. Procédé selon l'une des revendications précédentes dans lequel le polymère sacrificiel est un polymère de même nature qu'au moins un des polymères actifs et de masse moléculaire plus élevée.

7. Procédé selon la revendication 6 dans lequel la masse moléculaire du polymère sacrificiel est au moins 1,5 fois plus élevée que celle du polymère actif de même nature.

**8.** Procédé selon l'une des revendications 1 à 5 dans lequel le polymère sacrificiel est un polymère de nature différente par rapport au ou aux polymères actifs et comporte des liaisons plus fragiles que celles du ou des polymères actifs.

**9.** Procédé selon l'une des revendications précédentes dans lequel le polymère sacrificiel est choisi parmi les polyacrylamides, hydrolysés ou non (PAM, HPAM), les copolymères acrylamide avec au moins un monomère sulfoné, le polyoxyde d'éthylène (POE), les polysaccharides.

Europäisches
Patentamt

European
Patent Office

Office européen
des brevets

**RAPPORT DE RECHERCHE EUROPEENNE**

Numéro de la demande

EP 12 29 0192

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 4 128 482 A (KNIGHT ROBERT K) 5 décembre 1978 (1978-12-05) * colonne 1, ligne 13 - ligne 16 * * colonne 2, ligne 56 - colonne 3, ligne 64 * * colonne 4, ligne 12 - ligne 20 * * exemple 1; tableau 1 * ----- | 1,5,8,9 | INV. C09K8/588 |
| X | US 3 684 014 A (NORTON CHARLES J ET AL) 15 août 1972 (1972-08-15) * colonne 2, ligne 32 - ligne 48 * * colonne 3, ligne 4 - ligne 45 * * revendications 1-6,11 * ----- | 1,5,8,9 | |
| X | US 3 707 187 A (KNIGHT BRUCE L) 26 décembre 1972 (1972-12-26) * colonne 1, ligne 58 - colonne 2, ligne 29 * * colonne 3, ligne 14 - ligne 31 * ----- | 1,5,8,9 | |
| X | US 2008/194434 A1 (HUFF JUERGEN [DE] ET AL) 14 août 2008 (2008-08-14) * alinéa [0009] * * alinéa [0016] * * alinéa [0019] - alinéa [0026] * * alinéa [0037] - alinéa [0042] * * alinéa [0045] - alinéa [0053] * * alinéa [0074] - alinéa [0077] * * alinéa [0084] * * revendications 18,24 * ----- | 1,6,8,9 | DOMAINES TECHNIQUES RECHERCHES (IPC) C09K |

Le présent rapport a été établi pour toutes les revendications

| Lieu de la recherche | Date d'achèvement de la recherche | Examinateur |
|---|---|---|
| La Haye | 9 août 2012 | Boulon, Annie |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 12 29 0192

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

09-08-2012

| Document brevet cité au rapport de recherche | | Date de publication | Membre(s) de la famille de brevet(s) | | Date de publication |
|---|---|---|---|---|---|
| US 4128482 | A | 05-12-1978 | US | 4039028 A | 02-08-1977 |
| | | | US | 4128482 A | 05-12-1978 |
| US 3684014 | A | 15-08-1972 | AUCUN | | |
| US 3707187 | A | 26-12-1972 | AUCUN | | |
| US 2008194434 | A1 | 14-08-2008 | AT | 403063 T | 15-08-2008 |
| | | | BR | PI0607014 A2 | 01-12-2009 |
| | | | CA | 2595467 A1 | 03-08-2006 |
| | | | CN | 101107419 A | 16-01-2008 |
| | | | DE | 102005003569 A1 | 03-08-2006 |
| | | | DK | 1844212 T3 | 24-11-2008 |
| | | | EA | 200701507 A1 | 28-02-2008 |
| | | | EP | 1844212 A1 | 17-10-2007 |
| | | | US | 2008194434 A1 | 14-08-2008 |
| | | | WO | 2006079615 A1 | 03-08-2006 |

EPO FORM P0460

Pour tout renseignement concernant cette annexe : voir Journal Officiel de l'Office européen des brevets, No.12/82